# EUROPÄISCHE PATENTANMELDUNG

(11) **EP 0 748 090 A2**
(43) Veröffentlichungstag der Anmeldung: **11.12.1996**
(21) Anmeldenummer: 96109052.9
(22) Anmeldetag: 05.06.1996
(51) Int. Cl.: H04L 25/49, H04L 25/03

(54) **Schaltungsanordnung zur Entzerrung von Signalen bei der Datenübertragung**

(30) Priorität: 09.06.1995 DE 19521134
(71) Anmelder: SIEMENS AKTIENGESELLSCHAFT, 80333 München (DE)
(72) Erfinder: Hering, Bernhard, Dr. rer. nat., 81479 München (DE); Müller, Rudolf, Dipl.-Ing. (FH), 83059 Kolbermoor (DE)

(57) **Zusammenfassung**

In einem Kommunikationssystem mit einer Hauptstation (M) und mit mehreren Unterstationen (S1...Sx), die jeweils zwei elektrooptische Wandler (EDW), eine Einkoppelungseinrichtung (EK) sowie eine Sende- und Empfangseinrichtung (SEN/EMP) aufweisen, wobei auf dem LWL-Bus nur immer eine Station sendet, sind in jeder Unterstation (S1...Sx) ein Inverter (IV1), ein Dekodierer (DEK) und ein Kodierer (KOD) angeordnet. Dabei invertiert jede passive Station die durchzureichenden Signale, wobei eine mithörende (EMP) Station die Signale sowohl in normaler als auch in invertierter Pegellage zu dekodieren (DEK) vermag. Eine sendende (SEN) Station vermag ihre Sendesignal auf den Ausgang (EOW) einzukoppeln (EK), ohne dabei eine zusätzliche Invertierung vorzunehmen. Dabei wird zur sendeseitigen Kodierung (KOD) mit jedem Pegelwechsel (NRZI-Kodierung) ein kurzer Puls bewirkt, indem der NRZI-Datenausgang (Tx) des Senders (SEN) auf die beiden Eingänge eines Exklusiv-ODER-Gatters (XOR-S) einmal direkt und einmal digital Verzögert (DV) gegeben wird. Zur empfangsseitigen (EMP) Dekodierung (DEK) wird mit jedem Eingangspuls ein Pegelwechsel am Ausgang mittels eines 1-Bit-Zählers (EZ) bewirkt.

## Beschreibung

Die Erfindung bezieht sich auf eine Schaltungsanordnung zur Entzerrung von Signalen bei der Datenübertragung mittels NRZI-Kodierung über einen Lichtwellenleiter-Bus in einem Kommunikationssystem mit einer Hauptstation und mit mehreren Unterstationen, die jeweils zwei elektrooptische Wandler, eine Einkoppelungseinrichtung sowie eine Sende- und Empfangseinrichtung aufweisen, wobei auf dem Lichtwellenleiter-Bus nur immer eine Station sendet.

In einer Datenübertragungseinrichtung, beispielsweise in einem Prozessorsystem mit mehreren abgesetzten Peripherie-Baugruppen, werden die einzelnen Stationen (Slaves 1 bis x) mit einer Hauptstation (Master) mit einem Lichtwellenleiter-Bus verbunden. Dabei ist es erforderlich, die elektrischen Signale in Licht und in jeder Station die Lichtsignale in elektrische Signale und dann umgekehrt mit einem elektrooptischen Wandler umzusetzen. Bei dieser Umsetzung werden jedoch, insbesondere bei Verwendung von kostengünstigen Wandlern wegen unterschiedlicher Schaltzeiten für L- nach H-Flanken und H- nach L-Flanken, die Signale verzerrt. Bei mehreren Stationen ergibt sich eine zunehmende Signalverzerrung. Das hat den Nachteil, daß bei hohen Baudraten die Zahl der maximal an einem Lichtwellenleiter-Bus zu betreibenden Peripherie-Baugruppen auf wenige Baugruppen begrenzt werden muß. Eine Verwendung von T-Stücken für Lichtwellenleiter ist wegen der hohen Dämpfungswerte nicht praktikabel.

Aufgabe der Erfindung ist es, eine Schaltungsanordnung anzugeben, die es ermöglicht, die oben geschilderten Verzerrungen erheblich zu reduzieren.

Diese Aufgabe wird bei einem eingangs beschriebenen Datenübertragungssystem mit den Merkmalen des Anspruchs 1 gelöst.

Erfindungsgemäß ist in jeder Unterstation ein Inverter, ein Dekodierer und ein Kodierer vorgesehen, so daß jede passive Station die durchzureichenden Signale invertiert und eine mithörende Station die Signale sowohl in normaler als auch in invertierter Pegellage zu dekodieren vermag. Ferner ist es mit der erfindungsgemäßen Schaltungsanordnung möglich, daß die sendende Station ihre Sendesignale auf den Ausgang einzukoppeln vermag, ohne dabei eine zusätzliche Invertierung vorzunehmen. Dazu wird in vorteilhafter Weise zur sendeseitigen Kodierung mit jedem Pegelwechsel der NRZI-Kodierung ein kurzer Puls erzeugt, indem der NRZI-Datenausgang des Senders auf die beiden Eingänge eines Exklusiv-ODER-Gatters einmal direkt und einmal digital verzögert gegeben wird, wobei empfangsseitig zur Dekodierung mit jedem Eingangspuls ein Pegelwechsel am Ausgang mittels eines Ein-Bitzählers bewirkt wird.

Durch die Invertierung der Signalpegel in jeder Station kann eine systematische Aufaddierung der Verzerrung wirksam und elegant verhindert werden. Durch die Invertierung werden die Verzögerungsunterschiede zwischen fallender und steigender Flanke, die in einer Station erzeugt werden, in der Folgestation nicht verstärkt, sondern kompensiert. Die maximale Verzerrung im gesamten LWL-Bus liegt somit auch bei vielen Stationen in der Größenordnung der Verzerrung einer Station. Die oben geschilderten weiteren Schaltmaßnahmen sind deshalb erforderlich, weil ein Sender nach Ausgabe einer NRZI-kodierten Nachricht sowohl auf Eins- als auch auf Nullpegel stehenbleiben kann. Ohne die zusätzlichen Maßnahmen würde die Einkoppelungseinrichtung fallweise, d.h. bei einem Eins-Pegel, als zusätzlicher, ungewollter Inverter wirken. Dies würde bedeuten, daß ein durchlaufendes Signal zweimal, d.h. letztendlich gar nicht invertiert werden würde. Daher wird mit der erfindungsgemäßen Schaltungsanordnung bei der senderseitigen Kodierung mit dem durch jedes Null-Bit im Datenstrom bewirkten Pegelwechsel ein kurzer Puls erzeugt. Für diese Kodierung wird der NRZI-Datenausgang des Senders auf die beiden Eingänge eines Exklusiv-ODER-Gatters einmal direkt und einem digital verzögert gegeben. Die digitale Verzögerung wird in Ausgestaltung der Erfindung beispielsweise von einem Flip-Flop erzeugt, das mit dem invertierten Sendeschritt-Takt die Daten (mit einem Halbbit Verzögerung) übernimmt.

Bei der empfangsseitigen Dekodierung bewirkt jeder Eingangspuls einen Pegelwechsel am Ausgang. Diese Umwandlung wird durch einen Ein-Bit-Zähler realisiert. Dieser kann in Ausgestaltung der Erfindung beispielsweise von einem rückgekoppelten D-Flip-Flop gebildet sein. Da der Zähler bei steigender Taktflanke weiterzählt, d.h. den Ausgang umschaltet, bewirkt jeder Puls einen Pegelwechsel des Ausgangs. Ein positiver Eingangspuls löst diesen Wechsel mit der Vorderflanke, ein negativer Puls mit der Rückflanke aus. Für den Empfänger ist dieser Unterschied belanglos. Es wird also jeder Pegelwechsel als Null-Bit gewertet. Diese Dekodiermöglichkeit ist mit einem Empfänger gegeben, wenn in der Ausgestaltung der Erfindung der Empfänger und Sender von einem HDLC-Kontrollerbaustein gebildet ist.
In vorteilhafter Weise kann die Einkoppelungseinrichtung bei der hier vorliegenden Kodiertechnik von einem einfachen Exklusiv-ODER-Gatter gebildet sein, da der Einspeisepunkt (XP) bei nichtaktivem Stationssender immer definitiv auf Null-Pegel liegt und somit eine ungewollte zusätzliche Invertierung durch das XOR-Einkoppelgatter vermieden wird.

Anhand der Zeichnung wird im folgenden die Erfindung kurz erläutert. Dabei zeigen
Figur 1 schematisch eine bekannte Unterstation,
Figur 2 schematisch eine erfindungsgemäße Unterstation,
Figur 3 ein Schaltbeispiel der erfindungsgemäßen Schaltungsanordnung einer Unterstation,
Figur 4 Signaldiagramme einer Unterstation am Lichtwellenleiter-Bus,
Figur 5 Signaldiagramme gemäß der erfindungsgemäßen Kodierurg,
Figur 6 ein Schaltbeispiel für eine Simplex-Lichtwellenleiter-Verschaltung und
Figur 7 entsprechende Signaldiagramme.

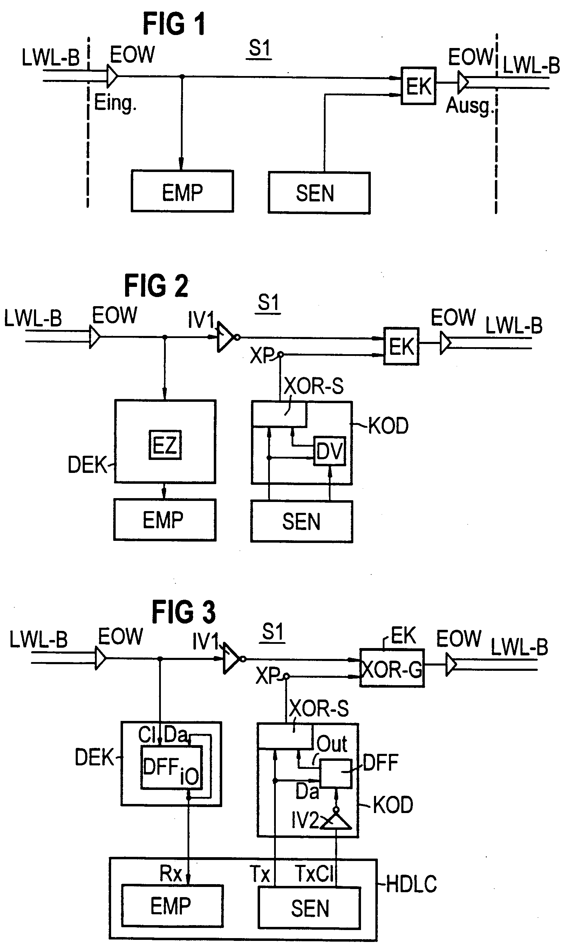

Figur 1 zeigt eine Unterstation S1, an deren Eingang der Lichtwellenleiter-Bus LWL angelangt und mit Hilfe des elektrooptischen Wandlers EOW werden die Lichtsignale in elektrische Signale umgewandelt, die einerseits auf den Empfänger EMP gehen und andererseits direkt über eine Einkoppelungseinrichtung EK zum Ausgang weitergereicht werden. Der Ausgang weist wieder einen elektrooptischen Wandler EOW auf, der die elektrischen Signale in Lichtsignale umwandelt und an den Lichtwellenleiter-Bus LWL weitergibt. Der Sender SEN kann, wenn er Sendesignale abzugeben hat, diese über die Einkoppelungseinrichtung EK auf den Lichtwellenleiter-Bus LWL geben.

In Figur 2 ist nun schematisch die erfindungsgemäße Schaltungsanordnung für eine Unterstation S1 gezeigt, die ähnlich wie die Schaltung in Figur 1 aufgebaut ist. Die unmittelbar weiterzureichenden Signale gelangen vom elektrooptischen Wandler EOW am Eingang über einen Inverter IV1 an die Einkoppelungseinrichtung EK. Die zu empfangenden Signale werden über eine Dekodiereinrichtung DEK auf den Empfänger EMP gegeben, wobei die Dekodiereinrichtung DEK einen Ein-Bit-Zähler EZ aufweist, wie oben bereits beschrieben. Die vom Sender SEN kommenden Sendesignale werden über eine Kodiereinrichtung KOD an die Einkoppelungseinrichtung EK gegeben. Um die erforderliche Kodierung bzw. die notwendigen Pegel bzw. Pegelwechsel einhalten zu können, gelangt das Sendesignal des Senders SEN einerseits direkt auf ein Exklusiv-ODER XOR-S und andererseits digital verzögert über die Verzögerungseinrichtung DV an das Exklusiv-ODER-Gatter XOR-S und von da an die Einkoppelungseinrichtung EK.

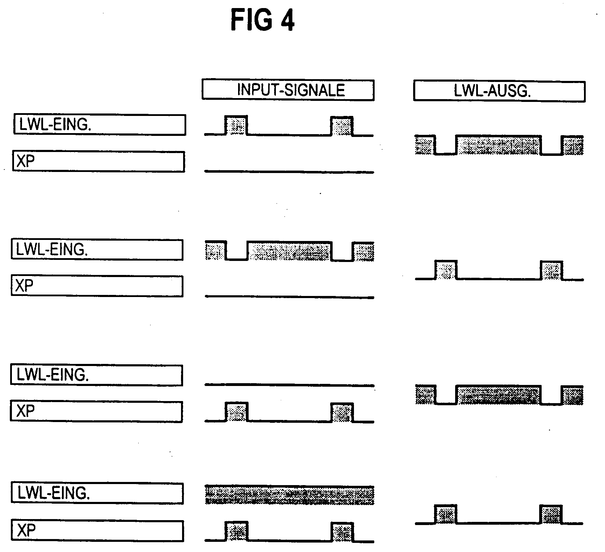

In Figur 3 ist ein Schaltungsbeispiel für die erfindungsgemäße Schaltungsanordnung im Detail gezeigt. Die Einkoppelungseinrichtung EK ist von einem Exklusiv-ODER-Gatter XOR-G gebildet. Die Dekodiereinrichtung DEK weist einen Ein-Bit-Zähler EZ auf, der von einem rückgekoppelten D-Flip-Flop DFF gebildet ist. Das zu empfangende Signal gelangt über de iO-Ausgang des D-Flip-Flop an den Eingang Rx des Empfängers EMP. Der Kodierer KOD weist das Exklusiv-ODER-Gatter XOR-S auf, das einerseits mit dem Sendesignal Tx des Senders SEN direkt beaufschlagt ist. Andererseits ist das Sendesignal Tx digital verzögert, wozu es auf den Eingang Da eines D-Flip-Flop DFF gelangt. Das Ausgangssignal Out des D-Flip-Flop gelangt an den zweiten Eingang des Exklusiv-Oder Gatters XOR-S. Die digitale Verzögerung erfolgt also mit diesem D-Flip-Flop, wobei der Sendeschritt-Takt TxCl des Senders SEN über einen weiteren Inverter IV2 den D-Flip-Flop zugeführt ist. Die Empfangs-/Sendeeinrichtung ist zweckmäßigerweise von einem HDLC-Kontroller gebildet, der die für eine NRZI-Kodierung erforderlichen Daten verfügbar macht.

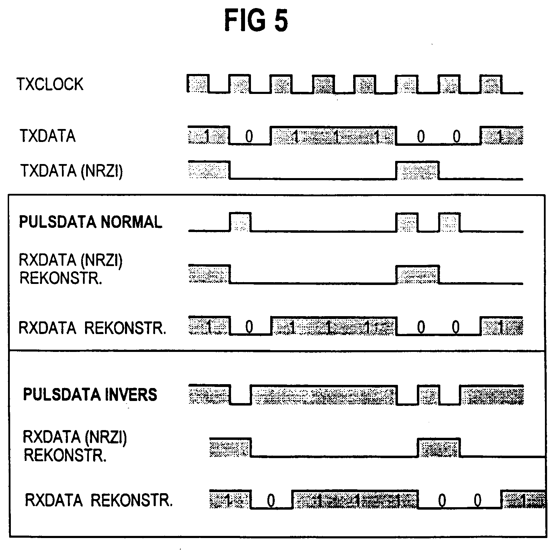

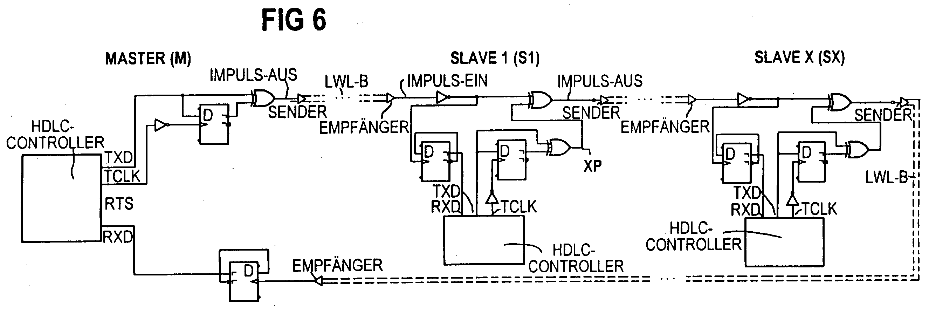

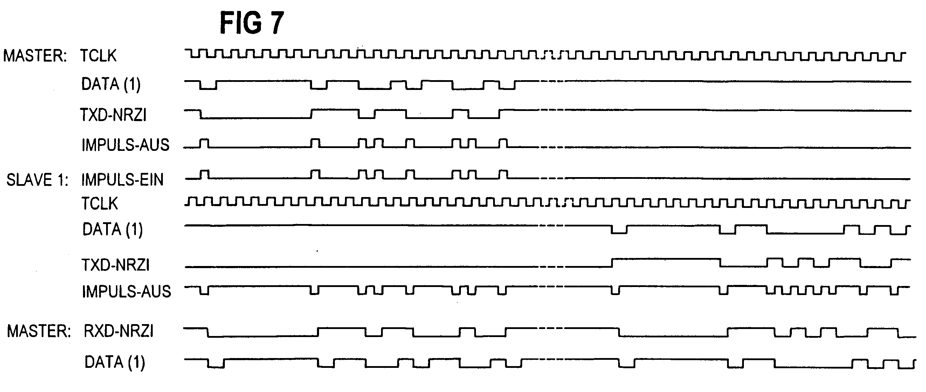

In Figur 4 ist mit Hilfe der verschiedenen Signaldiagramme das Stationsverhalten am Lichtwellenleiter-Bus LWL-B beschrieben, die Eingangs- und Ausgangssignale sowie die Signale am Einspeisepunkt XP gemäß der Fig. 6.
In den Signaldiagrammen gemäß der Figur 5 ist das erfindungsgemäße Kodierverfahren mit dem gezeigten Schaltbeispiel veranschaulicht. Die Figuren 6 und 7 zeigen ein Schaltbild und entsprechende Signaldiagramme am Beispiel einer Simplex-LWL-Verschaltung.

Mit der erfindungsgemäßen Schaltungsanordnung ist es mit einem geringen Schaltungsaufwand kostengünstig möglich, viele Stationen mit einem Lichtwellenleiter zu vernetzen.

## Patentansprüche

1. Schaltungsanordnung zur Erzeugung von Signalen bei der Datenübertragung mittels NRZI-Kodierung über einen Lichtwellenleiter-Bus (LWL-B) in einem Kommunikationssystem mit einer Hauptstation (M) und mit mehreren Unterstationen (S1...Sx), die jeweils zwei elektrooptische Wandler (EOW), eine Einkoppelungseinrichtung (EK) sowie eine Sende- und Empfangseinrichtung (SEN/EMP) aufweisen, wobei auf dem LWL-Bus nur immer eine Station sendet,
**dadurch gekennzeichnet**,
daß in jeder Unterstation (S1...Sx) ein Inverter (IV1), ein Dekodierer (DEK) und ein Kodierer (KOD) angeordnet sind, wobei jede passive Station die durchzureichenden Signale invertiert,
daß eine mithörende (EMP) Station die Signale sowohl in normaler als auch in invertierter Pegellage zu dekodieren (DEK) vermag,
daß eine sendende (SEN) Station ihr Sendesignal auf den Ausgang (EOW) einzukoppeln (EK) vermag, ohne dabei eine zusätzliche Invertierung vorzunehmen,
daß zur sendeseitigen Kodierung (KOD) mit jedem Pegelwechsel (NRZI-Kodierung) ein kurzer Puls bewirkt wird, indem der NRZI-Datenausgang (Tx) des Senders (SEN) auf die beiden Eingänge eines Exklusiv-ODER-Gatters (XOR-S) einmal direkt und einmal digital verzögert (DV) gegeben wird, und
daß zur empfangsseitigen (EMP) Dekodierung (DEK) mit jedem Eingangspuls ein Pegelwechsel am Ausgang mittels eines 1-Bit-Zählers (EZ) bewirkt wird.

2. Schaltungsanordnung nach Anspruch 1,
**dadurch gekennzeichnet**, daß die Koppelugnseinrichtung (EK) von einem Exklusiv-ODER-Gatter (XOR-G) gebildet ist.

3. Schaltungsanordnung nach Anspruch 1 oder 2, **dadurch gekennzeichnet,** daß die digitale Verzögerung durch eine D-Flip-Flop (DFF) erzeugt wird, welches mit dem invertierten (IV2) Sendeschritt-Takt- (TxCl) die Sende-Daten (Tx) übernimmt.

4. Schaltungsanordnung nach einem der vorhergehenden Ansprüche,
**dadurch gekennzeichnet,** daß der 1-Bit-Zähler (EZ) von einem rückgekoppelten D-Flip-Flop (DFF) gebildet ist.

5. Schaltungsanordnung nach einem der vorhergehenden Ansprüche, **dadurch gekennzeichnet,** daß in der Hauptstation (M) ein Steuerprozessor vorgesehen ist, welcher von einem HDLC-Kontroller gebildet ist.

6. Schaltungsanordnung nach einem der vorhergehenden Ansprüche,
**dadurch gekennzeichnet,** daß die Sende- und Empfangseinrichtung von einem HDLC-Kontroller gebildet ist.
